# EUROPÄISCHE PATENTSCHRIFT

(11) **EP 0 928 922 B1**
(45) Veröffentlichungstag und Bekanntmachung des Hinweises auf die Patenterteilung: **10.03.2004**
(21) Anmeldenummer: 98123212.7
(22) Anmeldetag: 05.12.1998
(51) Int. Cl.: F16L 41/08

(54) **Einrichtung zum Anschliessen eines Zweigrohrs an ein Kanalrohr und Kanalrohr-Anschlusssystem**
Device for connecting a branch pipe to a main pipe and its connecting system
Dispositif pour raccorder une conduite de dérivation à une canalisation principale et système de raccordement

(30) Priorität: 12.01.1998 DE 19800612
(43) Veröffentlichungstag der Anmeldung: 14.07.1999
(73) Patentinhaber: Tiroler Röhren- und Metallwerke Aktiengesellschaft, A-6060 Hall (AT)
(72) Erfinder: Mutschlechner, Hermann, 6063 Rum (AT); Zwirner, Klaus, 6068 Mils (AT); Berktold, Sieghart, Ing., 6082 Ellbögen (AT); Maurer, Reinhold, Ing., 6020 Innsbruck (AT)
(74) Vertreter: Lindner, Michael, Dipl.-Ing.

(56) Entgegenhaltungen:
- DE-A- 19 842 259
- DE-U- 9 015 652
- DE-U- 9 314 839
- DE-U- 29 710 018
- FR-A- 2 584 475

## Beschreibung

Die Erfindung betrifft eine Einrichtung zum Anschluß eines Zweigrohrs an ein eine Durchbrechung aufweisendes Kanalrohr, mit einem Befestigungsmittel, einem Rohrstutzen, einem einstückig damit ausgebildeten Rahmen und mit jeweils einem an beiden Längsendabschnitten des Rahmens zur Aufnahme des Befestigungsmittels vorgesehenen Durchbruch, wobei der Rahmen am Kanalrohr über das Befestigungsmittel festlegbar ist und an seiner dem Kanalrohr zugewandten Seite eine umlaufende Nut aufweist, in der eine Dichtungsvorrichtung umlaufend angeordnet ist. Die Erfindung betrifft ferner ein Kanalrohr-Anschlußsystem mit einem Kanalrohr, das eine - in Draufsicht - rechteckförmige Durchbrechung aufweist, und einer Einrichtung zum Anschluß eines Zweigrohrs im Bereich der Durchbrechung, wobei die Einrichtung Befestigungsmittel zu deren Anbringung an dem Kanalrohr aufweist.

Eine derartige Einrichtung zum Anschluß eines Zweigrohrs ist aus der Druckschrift DE 297 10 018 U1 bekannt. Darin ist ein Abzweigungsanschluß offenbart, der einen Sattelstutzen, einen Anschlußstutzen sowie einen Befestigungssteg umfaßt. Der Abzweigungsanschluß wird mittels Schrauben befestigt, die in dem Befestigungssteg vorgesehene Durchgangsbohrungen durchgreifen. Zur Abdichtung der in dem Kanalrohr vorgesehenen Öffnung ist eine umlaufende Dichtung vorgesehen, die in einer Nut angeordnet ist. Zur Abdichtung der Durchgangsbohrungen sind Dichtungshülsen vorgesehen.

Weitere Einrichtungen zum Anschluß eines Zweigrohrs sind beispielsweise aus FR2584475A1, DE 93 14 839 U1 oder DE 90 15 652 U1 bekannt. Eine weitere Einrichtung zum Anschluß eines Zweigrohrs ist aus der österreichischen Patentschrift 375 120 bekannt. Die auch als Kanalanschlußstück bezeichnete Einrichtung wird dazu verwendet, ein Zweigrohr an ein üblicherweise aus Beton, Asbestzement, Steingut oder Ton bestehendes Kanalrohr anzuschließen, wobei hierfür der Kanalrohrmantel des Kanalrohrs mit einer Durchbrechung versehen wird. Zweigrohre werden bspw. dann benötigt, wenn ein neu erbautes Haus an das bestehende Kanalsystem angeschlossen werden muß.

Das Kanalanschlußstück weist einen Rohrstutzen auf, dessen eines Längsende mit einer rechteckförmigen Platte fest verbunden ist, während das andere Längsende zur Aufnahme des Zweigrohrs ausgebildet ist. Auf der dem Rohrstutzen gegenüberliegenden Seite der Platte sind senkrecht zu dieser sich erstreckende Seitenwände an allen vier Seiten der Platte angebracht. An den der Platte gegenüberliegenden Ecken der Seitenwände sind Pratzen vorgesehen, die nach außen im wesentlichen senkrecht zu der jeweiligen Seitenwand verlaufen.

Zur Befestigung des Kanalanschlußstücks an dem Kanalrohr werden die Seitenwände mit den Pratzen in die ebenfalls rechteckförmige Durchbrechung eingefädelt, so daß die Pratzen den Kanalrohrmantel hintergreifen. Anschließend wird auf die Einheit aus Rohrstutzen und Platte ein Rahmen aufgesetzt, der sich seitlich von der Platte am Kanalrohr abstützt. Da es zum Aufsetzten notwendig ist, den Rohrstutzen festzuhalten, ist dieser Montageschritt besonders umständlich. Insbesondere besteht die Gefahr, daß Platte und Rohrstutzen durch die Durchbrechung hindurch in das Kanalrohr fallen.

Zur Fixierung des Kanalanschlußstücks am Kanalrohr werden Schrauben in den Rahmen und die Platte eingebracht, wobei das Festziehen der Schrauben die Platte radial nach außen an den Rahmen zieht und folglich die Pratzen an die Innenseite des Kanalrohrmantels drückt. Durch das Verspannen von Pratzen und Rahmen zwischen dem Kanalrohr erfolgt somit die Fixierung des Rohrstutzens an dem Kanalrohr.

Obgleich sich dieses Kanalanschlußstück in der Praxis bewährt hat, sind bezüglich der Montagefreundlichkeit und der Herstellungskosten weitere Verbesserungen wünschenswert.

Vor diesem Hintergrund ist es Aufgabe der vorliegenden Erfindung, eine Einrichtung der eingangs genannten Art zu schaffen, die montagefreundlich und kostengünstig herstellbar ist und über gute Abdichtungseigenschaften verfügt.

Die der Erfindung zugrundeliegende Aufgabe wird bei einer Einrichtung der eingangs genannten Art dadurch gelöst, daß unterhalb des Durchbruchs ein Freiraum als Teil der Nut vorgesehen ist, wobei die den Freiraum begrenzenden Flächen so ausgebildet sind, daß sie - bei festgelegtem Rahmen - die Dichtungsvorrichtung gegen das Befestigungsmittel drücken.

Die erfindungsgemäße Lösung hat den Vorteil, daß durch die Ausgestaltung der Flächen die Dichtungsvorrichtung mit hoher Kraft gegen den gewindelosen Längsabschnitt der Schraube gedrückt wird, so daß eine sehr gute Abdichtung erzielt wird. Hiermit ist es insbesondere möglich, die strengen Normen für unter Druck stehende Rohre auf kostengünstige Weise zu erfüllen. In einer vorteilhaften Weiterbildung der Erfindung ist das Befestigungsmittel eine Schraube, vorzugsweise eine Flachrundschraube.

Dies hat den Vorteil, daß das Befestigungsmittel kostengünstig und die Montage sehr einfach ausführbar ist.

In einer vorteilhaften Weiterbildung der Erfindung umfaßt die Schraube einen Schraubenschaft, der sich in drei Längsabschnitte gliedert, und einen Schraubenkopf, wobei der erste dem Schraubenkopf benachbarte Längsabschnitt als Vierkant und der sich daran anschließende zweite Längsabschnitt gewindelos ausgebildet ist.

Dies hat den Vorteil, daß der mit der Durchbrechung zusammenwirkende erste Längsabschnitt bedingt durch seine Form als Verdrehsicherung wirkt. Ferner gewährleistet der zweite Längsabschnitt eine sehr gute Abdichtung, da dessen Oberfläche glatt ist und somit mit einer Dichtung sehr gut zusammenwirken kann.

In einer vorteilhaften Weiterbildung der Erfindung weist der Rahmen eine Öffnung auf, in die ein Ende des Rohrstutzens mündet und die eine Querschnittsfläche besitzt, die kleiner ist als eine Querschnittsfläche der Durchbrechung des Kanalrohrs. Ferner weist jedes Befestigungsmittel bevorzugt einen Längsabschnitt auf, der - bei festgelegtem Rahmen - einen im Kanalrohr vorgesehenen zur Durchbrechung hin randoffenen Schlitz hintergreift.

Dies hat den Vorteil, daß mit einfachen Mitteln die Befestigung der Einrichtung am Kanalrohr möglich ist, wobei der Längsabschnitt des Befestigungsmittels quasi die Funktion der bekannten Pratzen übernimmt. Bei der Verwendung einer Schraube als Befestigungsmittel wird der Schraubenkopf als die Durchbrechung hintergreifender Längsabschnitt eingesetzt, so daß das Befestigungsmittel sehr einfach ausgeführt ist.

In einer vorteilhaften Weiterbildung der Erfindung umfaßt das dem Rahmen abgewandte Ende des Rohrstutzens eine Muffe.

Dies hat den Vorteil, daß in einfacher Weise ein Zweigrohr mit dem Rohrstutzen durch Einstecken verbunden werden kann.

In einer vorteilhaften Weiterbildung der Erfindung umfaßt die Muffe eine Dichtungskammer, in die eine Dichtung, vorzugsweise ein Dichtungsring einlegbar ist.

Dies hat den Vorteil, daß je nach Anwendungsfall unterschiedliche an das anzuschließende Zweigrohr angepaßte Dichtungen in die Dichtungskammer einlegbar sind, wobei auf zusätzliche Befestigungsmittel verzichtet werden kann, da die Dichtung sicher in der Dichtungskammer gehalten ist.

In einer vorteilhaften Weiterbildung der Erfindung gliedert sich der Rohrstutzen in drei Längsabschnitte, wobei der mittlere Längsabschnitt eine Länge aufweist, die ein maschinelles Abtrennen des die Muffe umfassenden Längsabschnitts ermöglicht und wobei vorzugsweise der Außendurchmesser des mittleren Längsabschnitts an den Durchmesser des Zweigrohrs angepaßt ist.

Dies hat den Vorteil, daß der Rohrstutzen zwei unterschiedliche Anschlußmöglichkeiten bietet, nämlich einerseits den Anschluß über die Muffe oder andererseits den Anschluß des Zweigrohrs ohne Muffe direkt am Rohrstutzen. Um den muffenlosen Anschluß bereitzustellen, genügt es, den ersten Längsabschnitt mit bspw. einer Trennscheibe abzutrennen, was auf der Baustelle sehr einfach durchführbar ist. Durch eine entsprechende Wahl der Länge des mittleren Längsabschnitts läßt sich gewährleisten, daß der Rahmen beim Abtrennen nicht beschädigt wird.

In einer vorteilhaften Weiterbildung der Erfindung sind der Rahmen und der Rohrstutzen gegossen, d.h. als Gußkörper ausgebildet.

Dies hat den Vorteil, daß sich durch die einfache Ausgestaltung des Herstellungsverfahrens Kosten einsparen lassen.

Die der Erfindung zugrundeliegende Aufgabe wird des weiteren von einem Kanalrohr-Anschlußsystem der eingangs genannten Art dadurch gelöst, daß an den beiden Längsenden der Durchbrechung in Längsrichtung verlaufende Schlitze vorgesehen sind, die von den Befestigungsmitteln hintergriffen werden, um die Einrichtung an dem Kanalrohr festzulegen, und daß es die erfindungsgemäße Einrichtung umfaßt.

Das Kanalrohr-Anschlußsystem hat den Vorteil, daß die Montage sehr einfach ausfällt, da aufgrund der einstückigen Ausbildung der Einrichtung nur ein Bauteil zu handhaben ist. Darüber hinaus sind die zur Befestigung der Einrichtung erforderlichen Schlitze mit einfachen Mittel in das Kanalrohr einbringbar. Schließlich kann auf das bisher notwendige Einstecken von Schrauben in die im Kanalrohr und der Einrichtung vorgesehene Bohrungen verzichtet werden. Vielmehr kann die Einrichtung mit den Schrauben vormontiert und in diesem Zustand auf das Kanalrohr aufgesetzt werden, wobei die Schrauben lediglich noch in die vorgesehenen Schlitze eingeführt werden müssen.

Weitere Vorteile der Erfindung ergeben sich aus der Beschreibung und den beigefügten Zeichnungen.

Die Erfindung wird nachfolgend anhand eines Ausführungsbeispiels mit Bezug auf die Zeichnungen näher erläutert. Dabei zeigen:
- Fig. 1a: eine Seitenansicht einer Einrichtung zum Anschluß eines Zweigrohrs an ein Kanalrohr im Längsschnitt,
- Fig. 1b: eine Vorderansicht der Einrichtung im Querschnitt,
- Fig. 1c: eine Draufsicht eines Bereichs der Einrichtung,
- Fig. 1d: eine Draufsicht eines Bereichs der Einrichtung,
- Fig. 2a: eine schematische Darstellung der auf ein Kanalrohr aufgesetzten Einrichtung gemäß Figur 1b,
- Fig. 2b: eine schematische Darstellung der auf ein Kanalrohr aufgesetzten Einrichtung gemäß Figur 1a,
- Fig. 2c: eine Draufsicht eines Bereichs einer Durchbrechung in dem Kanalrohr und eine aufgesetzte Dichtung,
- Fig. 2d: eine schematische Darstellung eines Befestigungsmittels,
- Fig. 3: eine schematische Darstellung einer Schnittschablone zum Einbringen einer Durchbrechung in das Kanalrohr, und
- Fig. 4: eine Draufsicht und eine Schnittansicht einer Dichtung.

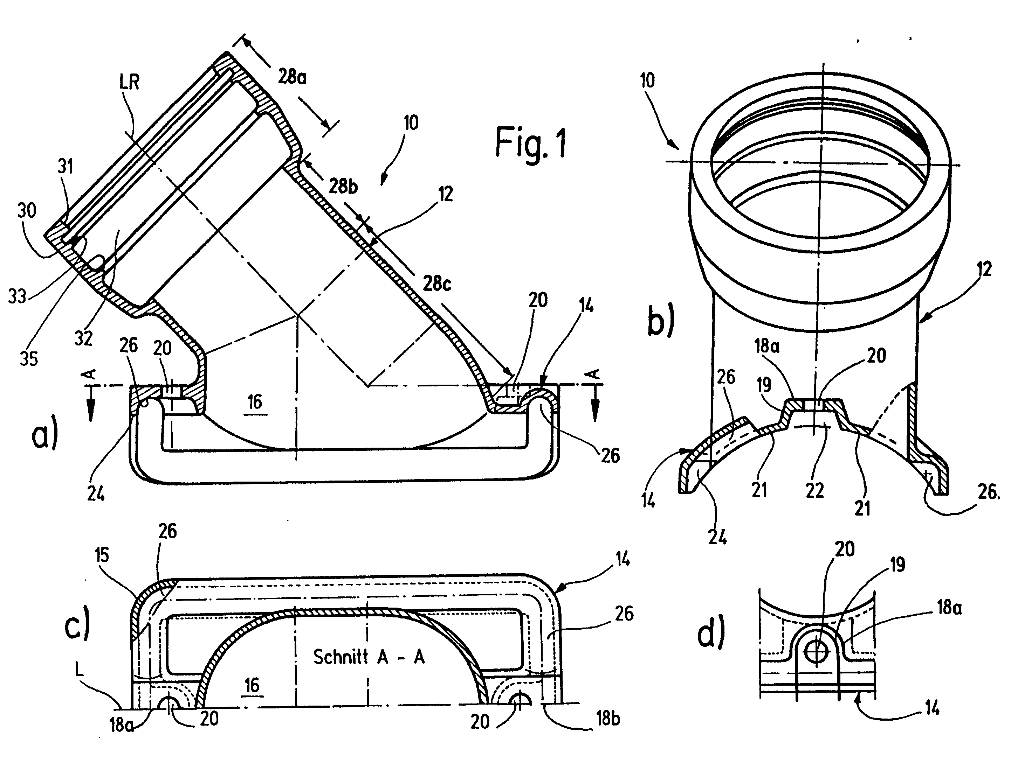

In Fig. 1a ist ein Kanalanschlußstück mit der Bezugsziffer 10 bezeichnet. Das Kanalanschlußstück 10 umfaßt einen Rohrstutzen 12 und einen Rahmen 14. Der Rohrstutzen 12 dient zum Anschluß des Zweigrohrs, während der Rahmen 14 mit dem Kanalrohr verbunden wird.

Der Rohrstutzen 12 und der Rahmen 14 sind einstückig ausgebildet, d.h., daß beide Teile eine körperliche Einheit miteinander bilden. Im vorliegenden Ausführungsbeispiel ist das Kanalanschlußstück 10 als Gußkörper ausgebildet.

Der Rahmen 14 ist in Draufsicht, wie in Fig. 1c dargestellt, rechteckförmig ausgebildet, wobei dessen Längsachse mit L gekennzeichnet ist. Der Rahmen 14 ist bezüglich der Längsachse L symmetrisch aufgebaut, so daß aus Gründen der Übersichtlichkeit lediglich eine Rahmenhälfte 15 dargestellt ist. Der Rahmen 14 weist einen Durchbruch 16 auf, der im mittleren Bereich des Rahmens 14 liegt.

Der Rahmen 14 weist darüber hinaus zwei Befestigungsbereiche 18a und 18b auf, die jeweils symmetrisch zur Längsachse L und einander gegenüberliegend im jeweiligen Längsrandbereich des Rahmens 14 liegen. Beide Befestigungsbereiche 18a, 18b weisen jeweils eine Bohrung 20 auf, die jeweils in einem erhabenen Abschnitt des Befestigungsbereichs eingebracht ist. Fig. 1b läßt deutlich erkennen, daß der Befestigungsbereich 18 gegenüber den in Querrichtung benachbarten Bereichen 21 hervorragt, wobei eine Stufe 19 gebildet ist. Unterhalb der Bohrungen 20 und zumindest teilweise seitlich durch die Stufe 19 begrenzt wird ein Freiraum 22 gebildet.

In Fig. 1d ist der Befestigungsbereich 18a nochmals vollständig in Draufsicht dargestellt. Deutlich zu erkennen ist die im Befestigungsbereich 18a vorgesehene Bohrung 20 und die sich in radialer Richtung anschließende Stufe 19, die schräg zur Zeichenebene verläuft und den Freiraum 22 zumindest teilweise seitlich umgibt.

Während sich der Rahmen 14 in Längsrichtung gerade erstreckt, weist er in Querrichtung, d.h. senkrecht zur Längsachse L, eine Bogenform auf, wie Fig. 1b deutlich erkennen läßt. Der Radius des Bogens ist dabei dem Außenradius des Kanalrohrs angepaßt.

Auf seiner dem Kanalrohr zugewandten Seite 24 weist der Rahmen 14 in dessen äußerem Randbereich eine eingebrachte Nut 26 auf, die umlaufend ausgebildet ist und damit den Durchbruch 16 vollständig umschließt. Die Nut 26 weist im Querschnitt eine Kreissegmentform auf. Diese Kreissegmentform wird lediglich in den Befestigungsbereichen 18a, 18b durch die Freiräume 22 unterbrochen.

Der Rohrstutzen 12 gliedert sich im wesentlichen in drei Längsabschnitte 28a, 28b und 28c, wobei der Längsabschnitt 28a das dem Rahmen 14 abgewandte Ende des Rohrstutzens 12 bildet, während der Längsabschnitt 28c das mit dem Rahmen 14 verbundene Ende darstellt und in den Durchbruch 16 des Rahmens 14 mündet.

Bei dem Längsabschnitt 28a handelt es sich um eine Muffe 30, in die ein Zweigrohr einsteckbar ist. An ihrem dem Rahmen 14 abgewandten Längsende weist die Muffe 30 einen Zentrierbund 31 auf, der als Einführhilfe für das einzusteckende Zweigrohr dient. An diesen Zentrierbund 31 schließt sich eine Dichtungskammer 32 an, die einen radial nach innen ragenden Haltering 33 umfaßt. Die Dichtungskammer 32 ist zur Aufnahme unterschiedlicher - in der Figur nicht dargestellter - Dichtungen ausgebildet. Die Dichtung läßt sich sehr einfach in diese Dichtungskammer 32 einstecken, wobei der Haltering 33 eine Fixierung der Dichtung in Richtung der Längsachse LR gewährleistet. Die Muffe 30 weist ferner einen Bund 35 auf, der in Längsrichtung beabstandet zu dem Zentrierbund 31 liegt und ein Auswinkeln des eingesteckten Zweigrohrs verhindern soll. Je nach Anwendungsfall werden bspw. sogenannte Tyton-Dichtungen bzw. Tyton-Dichtringe für Gußrohre oder GKS-Dichtungsringe für andere Rohrwerkstoffe eingesetzt.

Bei dem benachbarten Längsabschnitt 28b handelt es sich um ein übliches Rohrstück mit kreisförmigem Querschnitt. Der Außendurchmesser dieses Längsabschnitts 28b wird dabei so gewählt, daß der Längsabschnitt 28b zu einem muffenlosen Gußrohr paßt, das als Zweigrohr angeschlossen werden soll. Hierfür ist es notwendig, den Längsabschnitt 28a bspw. mittels einer Trennscheibe abzutrennen. Diese Vorgehensweise ist insbesondere für kleine Lose ökonomischer als die Fertigung von Anschlußstücken 10 mit und ohne Muffe 30. Darüber hinaus ermöglicht die entsprechende Anpassung des Außendurchmessers des Längsabschnitts 28b, daß im Bedarfsfall, wie bspw. direkt auf der Baustelle, sehr flexibel und schnell auf unterschiedliche Begebenheiten reagiert werden kann, da das Anschlußstück 10 zwei Anschlußarten zuläßt.

Die Länge des Längsabschnitts 28b ist so gewählt, daß ein Abtrennen der Muffe 30 mit einer Trennscheibe möglich ist, ohne bspw. den Rahmen 14 zu beschädigen.

Bei dem Längsabschnitt 28c handelt es sich um ein gebogenes Rohrstück, das von einem kreisförmigen Querschnitt in einen ovalen Querschnitt entsprechend dem Durchbruch 16 übergeht. Die Biegung des Längsabschnitts 28c ist dabei so gewählt, daß die Längsachse LR einen Winkel von 45° mit der Längsachse L des Rahmens 14 einschließt. Darüber hinaus liegen beide Längsachsen L und LR in einer Ebene.

Aus Fig. 1a ist deutlich zu erkennen, daß der Rohrstutzen 12 und der Rahmen 14 aus einem Stück gefertigt, vorzugsweise gegossen sind, so daß der Rahmen 14 im Bereich des Durchbruchs 16 einstückig in den Längsabschnitt 28c übergeht.

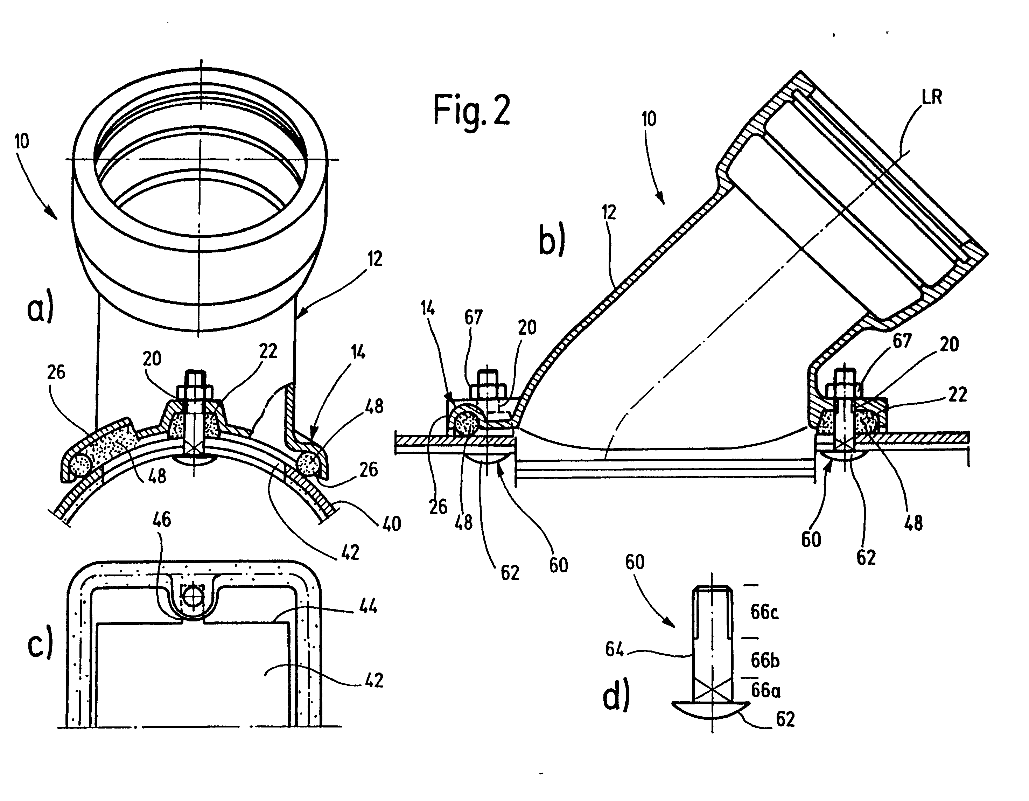

Mit Bezug auf die Fig. 2 bis 4 wird nun erläutert, wie das Anschlußstück 10 auf einem Kanalrohr befestigt wird.

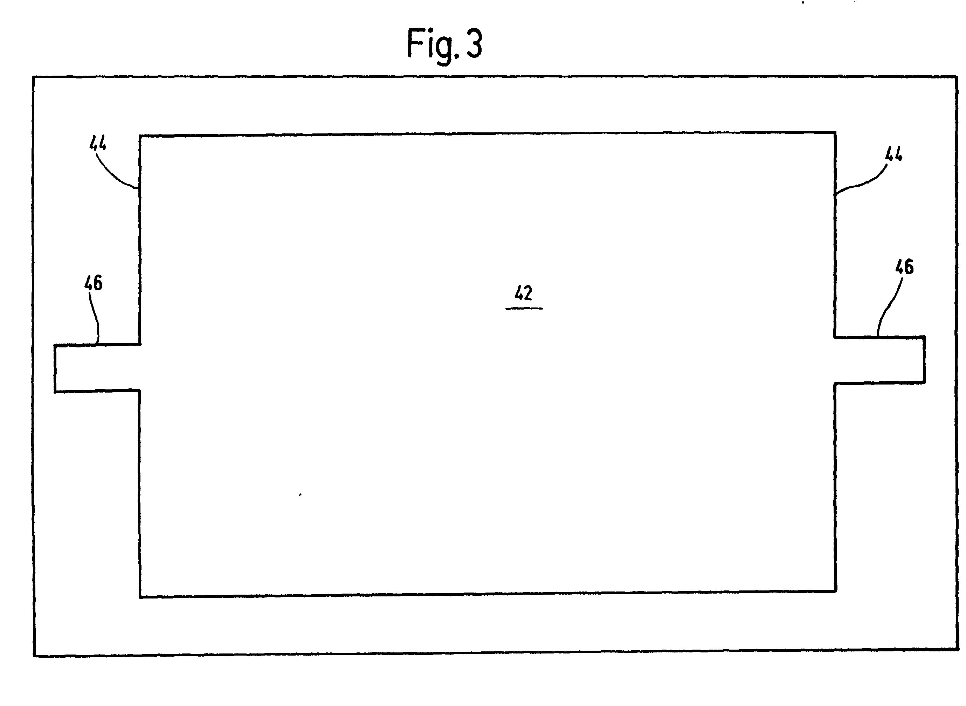

Zunächst wird in das Kanalrohr 40, das in der Fig. 2a bzw. 2b lediglich ausschnittsweise dargestellt ist, eine Durchbrechung bzw. Öffnung 42 eingebracht. Die Öffnung 42 weist dabei in Draufsicht die Form eines Rechtecks auf, dessen Längsachse in Richtung der Längsachse des Kanalrohrs verläuft. An den beiden Längsenden 44 der Öffnung 42 sind Schlitze 46 vorgesehen, die sich in Längsrichtung erstrecken. Die Breite der Schlitze 46 ist dabei an die Breite von noch zu erläuternden Befestigungsmitteln angepaßt. Der Übersichtlichkeit halber ist in Fig. 2c lediglich eine Hälfte der Öffnung 42 dargestellt. Eine zum Einbringen der Öffnung 42 und der Schlitze 46 geeignete Schnittschablone ist jedoch in Fig. 3 vollständig gezeigt.

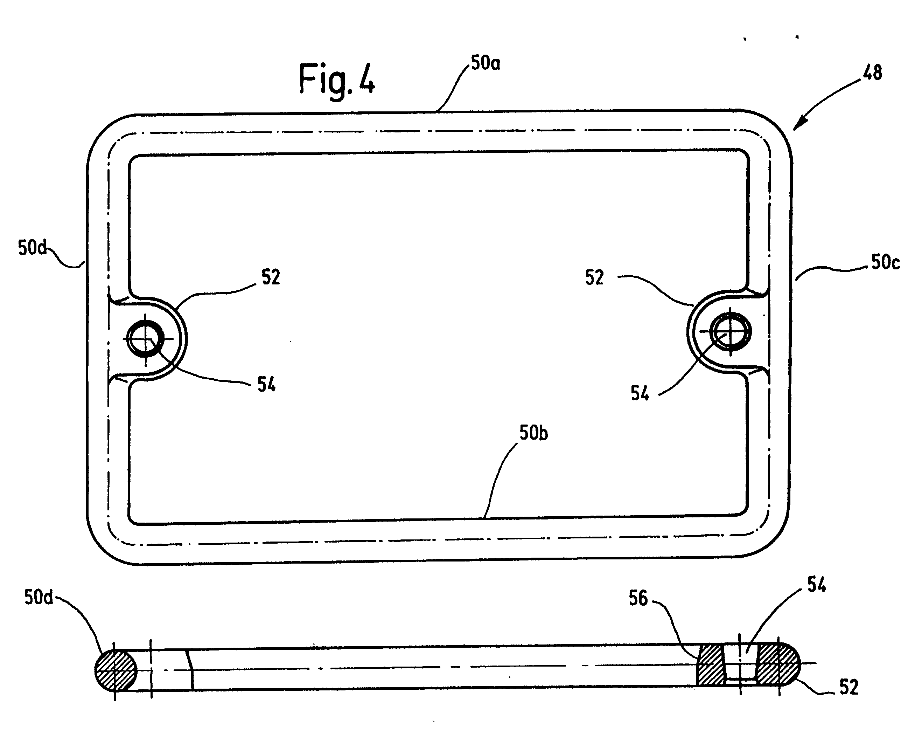

Das Kanalanschlußstück 10 wird vor dem Aufsetzen auf das Kanalrohr 40 mit einer Dichtung 48 versehen, die den Verbindungsbereich zwischen dem Anschlußstück 10 und dem Kanalrohr 40 nach außen abdichten soll. Damit läßt sich das Kanalanschlußstück auch für Druckleitungen verwenden. Die Form der Dichtung 48 ist so gewählt, daß die umlaufende Nut 26 sowie die beiden Freiräume 22 vollständig ausgefüllt werden. Die Dichtung 48 setzt sich somit, wie in Fig. 4 deutlich gezeigt ist, aus vier geraden Dichtungssträngen 50a, 50b, 50c und 50d zusammen, die rechteckförmig angeordnet sind, wobei die beiden Dichtungsstränge 50c und 50d an den Längsenden liegen. Wie in der Schnittdarstellung zu erkennen, weisen die vier Dichtungsstränge 50a bis 50d einen kreisförmigen Querschnitt auf. Die beiden Dichtungsstränge 50c, 50d besitzen darüber hinaus einen nach innen gerichteten Abschnitt 52, der die Form des Freiraums 22 besitzt, um diesen vollständig auszufüllen. In diesen Längsabschnitten 52 ist jeweils eine Bohrung 54 eingebracht, die - im eingesetzten Zustand - mit der Bohrung 20 fluchtet. Wie in der Schnittdarstellung zu erkennen ist, besitzt die Bohrung 54 zwei Längsabschnitte, die zueinander entgegengesetzt konisch verlaufen. Darüber hinaus ist eine innenliegende Kante 56 des Längsabschnitts 52 zumindest in einer oberen Hälfte geneigt.

Nachdem die Dichtung 48 in die Nut 26 sowie die Freiräume 22 eingebracht ist, wird das Anschlußstück 10 auf das Kanalrohr 40 aufgesetzt, so daß die Längsachse L parallel zur Längsachse des Kanalrohrs 40 verläuft. Anschließen werden in die Bohrungen 20 des Rahmens 14 sowie die Bohrungen 54 der Dichtung 48 Rundflachkopfschrauben 60 eingebracht, wobei hierfür durch den Rohrstutzen 12 hindurchgegriffen wird.

Wie in Fig. 2d gezeigt ist, umfaßt die Rundflachkopfschraube 60 einen Schraubenkopf 62 sowie einen Schraubenschaft 64. Dieser Schraubenschaft 64 gliedert sich in drei Längsabschnitte 66a, 66b und 66c, wobei der Längsabschnitt 66a mit dem Schraubenkopf 62 verbunden ist. Während die beiden Längsabschnitte 66b und 66c einen kreisförmigen Querschnitt besitzen, ist der Längsabschnitt 66a als Vierkant ausgebildet. Zusammen mit dem Schlitz 46 wirkt der Längsabschnitt 66a als Verdrehsicherung. Die Fig. 2d läßt noch erkennen, daß der Längsabschnitt 66c mit einem Gewinde versehen ist, während der Längsabschnitt 66b gewindelos ausgebildet ist. Die Länge der drei Längsabschnitte 60a, 60b und 60c wird jeweils so gewählt, daß im eingesetzten Zustand der Schraube 60 der Längsabschnitt 66a im Bereich des Schlitzes 46, der Längsabschnitt 66b im Bereich des Freiraums 22 und der Längsabschnitt 66c im Bereich der Bohrung 20 des Rahmens 14 liegt. Der Innendurchmesser der Bohrung 20 ist so auf den Außendurchmesser der Schraube 60 abgestimmt, daß nur ein geringes Spiel vorhanden ist.

Zum Fixieren dieser Schrauben 60 werden Muttern 67 aufgeschraubt, wobei das Kanalanschlußstück 10 zu dessen Befestigung so positioniert wird, daß die Schraubenköpfe 62 der Schrauben 60 die beiden Schlitze 46 untergreifen und somit zumindest bereichsweise an der Innenwandung des Kanalrohrs 40 anliegen können. Da der Durchmesser der Schraubenköpfe 62 größer gewählt ist als die Breite der Schlitze 46, lassen sich die Schrauben nur durch ein Verschieben in Längsrichtung herausnehmen; in radialer Richtung des Kanalrohrs sind sie dagegen gesichert. Sind die Schrauben 60 in den Schlitzen 46 richtig positioniert, läßt sich das Kanalanschlußstück 10 durch Anziehen der Muttern 67 festspannen, wobei die umlaufende Dichtung 48 fest gegen die Außenwand des Kanalrohrs gepreßt wird, so daß eine sehr gute Abdichtung erzielt wird. Unterstützt wird die gute Abdichtung dadurch, daß die den Freiraum 22 begrenzenden Flächen des Rahmens 14 so ausgebildet sind, daß sie die Dichtung 48 beim Festspannen des Rahmens gegen den Längsabschnitt 66b der Schraube 60 drücken. Da dieser Längsabschnitt 66b gewindefrei ist, kann die Dichtung 48 über einen großen Flächenbereich vollständig an diesem Längsabschnitt 66b plan anliegen, mit dem Erfolg einer guten und zuverlässigen Abdichtung.

Selbstverständlich sind auch andere Formen des Rohrstutzens 12, des Rahmens 14 oder der Öffnung 42 denkbar, ohne den Bereich der Erfindung gemäß den Ansprüchen zu verlassen.

## Patentansprüche

1. Einrichtung zum Anschluß eines Zweigrohrs an ein eine Durchbrechung (42) aufweisendes Kanalrohr, mit einem Befestigungsmittel (60, 67), einem Rohrstutzen (12), einem einstückig damit ausgebildeten Rahmen (14) und mit jeweils einem an beiden Längsendabschnitten des Rahmens (14) zur Aufnahme des Befestigungsmittels (60, 67) vorgesehenen Durchbruch (20), wobei der Rahmen (14) am Kanalrohr über das Befestigungsmittel (60, 67) festlegbar ist und an seiner dem Kanalrohr zugewandten Seite (24) eine umlaufende Nut (26) aufweist, in der eine Dichtungsvorrichtung (48) umlaufend angeordnet ist, **dadurch gekennzeichnet, daß** unterhalb des Durchbruchs (20) ein Freiraum (22) als Teil der Nut (26) vorgesehen ist, wobei die den Freiraum begrenzenden Flächen so ausgebildet sind, daß sie - bei festgelegtem Rahmen (14) - die Dichtungsvorrichtung (48) gegen das Befestigungsmittel (60) drücken.

2. Einrichtung nach Anspruch 1, **dadurch gekennzeichnet, daß** das Befestigungsmittel (60, 67) eine Schraube, vorzugsweise eine Flachrundschraube umfaßt.

3. Einrichtung nach Anspruch 2, **dadurch gekennzeichnet, daß** die Schraube (60) einen Schraubenschaft (64), der sich in drei Längsabschnitte (66a, 66b, 66c) gliedert, und einen Schraubenkopf (62) umfaßt, wobei der erste dem Schraubenkopf (62) benachbarte Längsabschnitt (66a) als Vierkant und der sich daran anschließende zweite Längsabschnitt (66b) gewindelos ausgebildet ist.

4. Einrichtung nach einem der vorhergehenden Ansprüche, **dadurch gekennzeichnet, daß** der Rahmen (14) eine Öffnung (16) aufweist, in die ein Ende (28c) des Rohrstutzens (12) mündet und die eine Querschnittsfläche besitzt, die kleiner ist als eine Querschnittsfläche der Durchbrechung (42) des Kanalrohrs (40).

5. Einrichtung nach einem der vorhergehenden Ansprüche, **dadurch gekennzeichnet, daß** das Befestigungsmittel (60) einen Längsabschnitt, insbesondere einen Schraubenkopf (62) aufweist, der - bei festgelegtem Rahmen (14) - einen im Kanalrohr vorgesehenen, zur Durchbrechung (42) hin randoffenen Schlitz (46) hintergreifen kann.

6. Einrichtung nach einem der vorhergehenden Ansprüche, **dadurch gekennzeichnet, daß** das dem Rahmen (14) abgewandte Ende (28a) des Rohrstutzens eine Muffe (30) umfaßt.

7. Einrichtung nach Anspruch 6, **dadurch gekennzeichnet, daß** die Muffe (30) eine Dichtungskammer (32) umfaßt, in die eine Dichtung, vorzugsweise ein Dichtungsring einlegbar ist.

8. Einrichtung nach einem der Ansprüche 6 oder 7, **dadurch gekennzeichnet, daß** sich der Rohrstutzen (12) in drei Längsabschnitte (28a, 28b, 28c) gliedert, wobei der mittlere Längsabschnitt (28b) eine Länge aufweist, die ein maschinelles Abtrennen des die Muffe umfassenden Längsabschnitts (28a) ermöglicht.

9. Einrichtung nach Anspruch 8, **dadurch gekennzeichnet, daß** der mittlere Längsabschnitt (28b) des Rohrstutzens (12) einen Außendurchmesser besitzt, der an den Innendurchmesser des Zweigrohrs angepaßt ist.

10. Einrichtung nach einem der vorhergehenden Ansprüche, **dadurch gekennzeichnet, daß** der Rahmen (14) und der Rohrstutzen (12) gegossen sind.

11. Kanalrohr-Anschlußsystem mit einem Kanalrohr (40), das eine - in Draufsicht - rechteckförmige Durchbrechung (42) aufweist, und einer Einrichtung (10) zum Anschluß eines Zweigrohrs im Bereich der Durchbrechung (42), wobei die Einrichtung (10) Befestigungsmittel (60, 67) zu deren Anbringung an dem Kanalrohr (40) aufweist, **dadurch gekennzeichnet, daß** an den beiden Längsenden der Durchbrechung (42) in Längsrichtung verlaufende Schlitze (46) vorgesehen sind, die von den Befestigungsmitteln (60, 67) hihtergriffen werden, um die Einrichtung (10) an dem Kanalrohr festzulegen, und daß die Einrichtung (10) nach einem der Ansprüche 1 bis 10 ausgebildet ist.

## Claims

1. Device for coupling a branch pipe to a main pipe having an opening (42), comprising a fastening means (60, 67), a pipe socket (12), a frame (14) integrally formed therewith and having respective openings (20) at each longitudinal end portion of the frame (14) for receiving the fastening means (60, 67), the frame (14) being attachable to the main pipe by means of the fastening means (60, 67) and having a groove (26) running all around at the surface (24) facing the main pipe, in which groove a sealing device is provided and running all around, **characterized in that** below the opening (20) a clearance (22) as part of the groove (26) is provided, wherein the surfaces limiting the clearance are formed such that the sealing device (48) -with the frame (14) being attached- is urged against the fastening means (60).

2. Device according to claim 1, **characterized in that** the fastening means (60, 67) comprises a screw, preferably a saucer-head screw.

3. Device according to claim 2, **characterized in that** the screw (60) comprises a screw shank (64) which is divided into three longitudinal portions (66a, 66b, 66c), and a screw head (62), wherein the first longitudinal portion (66a) adjacent to the screw head (62) is formed as a square and the second successive longitudinal portion (66b) is thread-less.

4. Device according to any of the preceding claims, **characterized in that** the frame (14) comprises an opening (16) into which an end (28c) of the pipe socket (12) flows and which has a cross-sectional area being smaller as the cross-sectional area of the opening (42) of the main pipe (40).

5. Device according to any of the preceding claims, **characterized in that** the fastening means (60) comprises a longitudinal portion, preferably a screw head (62), which -with the frame (14) being attached- may lock into a slot (46) being opened towards the opening (42) and being provided in the main pipe.

6. Device according to any of the preceding claims, **characterized in that** the end (28a) of the pipe socket opposite to the frame (14) comprises a coupling (30).

7. Device according to claim 6, **characterized in that** the bushing (30) comprises a sealing chamber (32) adapted to receive a sealing, preferably a sealing ring.

8. Device according to any of claims 6 or 7, **characterized in that** the pipe socket (12) is divided into three longitudinal portions (28a, 28b, 28c), wherein the center longitudinal portion (28b) has a length which allows the cutting by machine of the longitudinal portion (28a) comprising the coupling.

9. Device according to claim 8, **characterized in that** the center longitudinal portion (28b) of the pipe socket (12) has an outer diameter which is adapted to the inner diameter of the branch pipe.

10. Device according to any of the preceding claims, **characterized in that** the frame (14) and the pipe socket (12) are cast.

11. Main pipe-coupling system comprising a main pipe (40) which has -in plan view- a rectangular opening (42), and a device (10) for coupling a branch pipe in the region of the opening (42), wherein the device (10) comprises fastening means (60, 67) for fastening it to the main pipe (40), **characterized in that** slots (46) extending in a longitudinal direction are provided at both longitudinal ends of the opening (42) and engaging with said fastening means (60, 67) as to attach the device (10) to the main pipe, and that the device (10) is provided according to any of claims 1 - 10.

## Revendications

1. Dispositif pour le raccordement d'un tuyau d'embranchement à une conduite présentant une perforation (42), avec un dispositif de fixation (60, 67), un embout de tube (12), un cadre réalisé d'un seul tenant avec ce dernier et avec, respectivement, une percée (20) prévue au niveau des deux tronçons finaux longitudinaux du cadre (14) pour le logement du dispositif de fixation (60, 67), le cadre (14) pouvant être fixé à la conduite par le biais du dispositif de fixation (60, 67) et comportant, sur son côté (24) tourné vers la conduite, une rainure circonférentielle (26) dans laquelle un dispositif d'étanchéification (48) est disposé de manière circonférentielle, **caractérisé en ce que**, en dessous de la percée (20) est prévu un espace (22) en tant que partie de la rainure (26), les surfaces délimitant l'espace étant réalisées de telle sorte qu'elles pressent, lorsque le cadre (14) est fixé, le dispositif d'étanchéification (48) contre le dispositif de fixation (60).

2. Dispositif selon la revendication 1, **caractérisé en ce que** le dispositif de fixation (60, 67) comprend une vis, de préférence une vis à tête bombée.

3. Dispositif selon la revendication 2, **caractérisé en ce que** la vis (60) comprend une tige de vis (64), qui se divise en trois tronçons longitudinaux (66a, 66b, 66c) et une tête de vis (62), le premier tronçon longitudinal (66a) adjacent à la tête de vis (62) étant réalisé en tant que carré et le deuxième tronçon longitudinal (66b), s'y raccordant, étant réalisé sans filet.

4. Dispositif selon l'une des revendications précédentes, **caractérisé en ce que** le cadre (14) comprend une ouverture (16) dans laquelle débouche une extrémité (28c) de l'embout de tube (12) et qui possède une surface de section transversale qui est inférieure à une surface de section transversale de la perforation (42) de la conduite (40).

5. Dispositif selon l'une des revendications précédentes, **caractérisé en ce que** le dispositif de fixation (60) comporte un tronçon longitudinal, en particulier une tête de vis (62) qui, lorsque le cadre (14) est fixé, peut s'appliquer sur les bords d'une fente (46) ouverte en direction de la perforation (42), prévue dans la conduite.

6. Dispositif selon l'une des revendications précédentes, **caractérisé en ce que** l'extrémité (28a), ne faisant pas face au cadre (14), de l'embout de tube comprend un manchon (30).

7. Dispositif selon la revendication 6, **caractérisé en ce que** le manchon (30) comprend une chambre d'étanchéification (32) dans laquelle un joint, de préférence un anneau d'étanchéité, peut être inséré.

8. Dispositif selon la revendication 6 ou 7, **caractérisé en ce que** l'embout de tube (12) est divisé en trois tronçons longitudinaux (28a, 28b, 28c), le tronçon longitudinal central (28b) présentant une longueur qui permet une séparation mécanique du tronçon longitudinal (28a) entourant le manchon.

9. Dispositif selon la revendication 8, **caractérisé en ce que** le tronçon longitudinal central (28b) de l'embout de tube (12) possède un diamètre externe qui est adapté au diamètre interne du tuyau d'embranchement.

10. Dispositif selon l'une des revendications précédentes, **caractérisé en ce que** le cadre (14) et l'embout de tube (12) sont coulés.

11. Système de raccord pour conduite avec une conduite (40), qui comprend, suivant une vue de dessus, une perforation de forme rectangulaire (42), et un dispositif (10) de raccordement d'un tuyau d'embranchement au niveau de la perforation (42), le dispositif (10) comprenant des dispositifs de fixation (60, 67) pour le montage à la conduite (40), **caractérisé en ce que**, aux deux extrémités longitudinales de la perforation (42) sont prévues, dans le sens longitudinal, des fentes (46) sur lesquelles sont appliqués les dispositifs de fixation (60, 67) afin de fixer le dispositif (10) à la conduite, et **en ce que**, le dispositif (10) est réalisé selon l'une des revendications 1 à 10.
